# EUROPEAN PATENT SPECIFICATION

(11) **EP 4 120 468 B1**
(45) Date of publication and mention of the grant of the patent: **01.04.2026**
(21) Application number: 22783417.3
(22) Date of filing: 17.02.2022
(51) Int. Cl.: H01M 50/593, H01M 50/588

(54) **BATTERY AND ELECTRIC APPARATUS**
BATTERIE UND ELEKTRISCHE VORRICHTUNG
BATTERIE ET DISPOSITIF ÉLECTRIQUE

(30) Priority: 09.04.2021 CN 202120733682 U
(43) Date of publication of application: 18.01.2023
(73) Proprietor: Contemporary Amperex Technology (Hong Kong) Limited, Central, Central And Western District (HK)
(72) Inventor: WANG, Xuehui, Ningde, Fujian 352100 (CN); LIANG, Changqing, Ningde, Fujian 352100 (CN); CHEN, Xiaobo, Ningde, Fujian 352100 (CN); LIN, Qinzhong, Ningde, Fujian 352100 (CN)
(74) Representative: Gong, Jinping
(86) International application number: PCT/CN2022/076681
(87) International publication number: WO 2022/213728

(56) References cited:
- CN-U- 206 727 133
- CN-U- 206 727 133
- CN-U- 207 743 290
- CN-U- 207 896 173
- CN-U- 208 819 951
- CN-U- 211 629 184
- CN-U- 214 589 171
- US-A1- 2016 315 356
- US-A1- 2020 185 793
- US-B2- 10 644 276

## Description

### TECHNICAL FIELD

Embodiments of this application relate to the technical field of batteries, and in particular, to a battery and an electric apparatus.

### BACKGROUND

At present, a battery typically includes a plurality of battery cells and end plates, where the end plates are fixed to two ends of the plurality of battery cells in their arrangement direction, and are used to resist expansion forces of the plurality of battery cells during charging and discharging. Therefore, the end plates need to not only have high strength to resist an expansion force of the battery cells in their whole life cycle, but also keep insulated from the battery cells to prevent short circuit between the battery cells and the end plates.

To obtain high strength, end plates are often made of a metal material and composited with an insulating material to realize insulation between the end plates and the battery cells. An end plate with such structure can realize insulation between the end plate and the battery cells under normal operating conditions. However, after some battery cells in a battery experience thermal runaway, the insulation between the end plate and the battery cells is apt to fail, causing high voltage short circuit of the battery.
CN 206 727 133 describes a battery module comprising of an output pole base assembled on the end plate for the insulation of the output pole copper bar.
CN 207 896 173 illustrates a battery module with an output pole base on the end plate to eliminate the vibrations of the battery.
US 2016/315356 describes a battery module comprising an insulative mounting member with a printed circuit board (PCB).
US 10 644 276 illustrates a battery module including an insulation housing for the connection of electrode leads.

### SUMMARY

In view of the foregoing problem, the present invention provide a battery and an electric apparatus as specified in the appended claim set, which can not only guarantee strength and insulation requirements on an end plate in normal use of the battery, but also reduce risks of high voltage short circuit in thermal runaway of the battery.

According to one aspect of the embodiments of this application, a battery is provided, including: a plurality of battery cells arranged in a first direction; an end plate disposed at an end of the plurality of battery cells in the first direction; an insulating member for connecting with the end plate, where the insulating member is arranged on the top surface of the end plate in a second direction, the second direction being perpendicular to the first direction; where the insulating member has a maximum length A in a third direction, and the end plate has a maximum length B in the third direction, where A≥0.9B and the third direction is perpendicular to the first direction and the second direction.

By using the foregoing solution, the end plate is disposed at the end of the plurality of battery cells for resisting an expansion force of the plurality of battery cells during charging and discharging, and the insulating member has a large length in the third direction, almost enough to fully cover the top surface of the end plate. Therefore, the insulating member can not only provide considerably complete insulation protection for the end plate when the battery is in normal use, but also fully cover the top surface of the end plate in a case of melting of the insulating member caused by thermal runaway of the battery cells. In this way, creepage distances and electrical gaps at all portions on the top of the end plate can still meet an insulation requirement and therefore avoid high-voltage ignition between the end plate and the battery cells.

In some embodiments, 0.9B≤A≤B.

By using the foregoing solution, an unnecessary volume of the insulating member is saved while the insulation protection of the insulating member to the end plate is guaranteed, facilitating a small volume of the battery.

In some embodiments, the battery cells have a maximum length C in the third direction, where A≥0.9C.

In some embodiments, projections of the insulating member and the battery cells in the first direction at least partially overlap.

By using the foregoing solution, an edge of the top surface of the battery cells in the second direction is separated from the top surface of the end plate by the insulating member. Therefore, when an electrical signal of the battery cells is led out from the top of the end plate, the electrical signal is protected from the end plate by the insulating member, which increases the creepage distance and electrical gap between the battery cells and the end plate, thus preventing a short circuit between the battery cells and the end plate.

In some embodiments, the insulating member has a minimum thickness greater than or equal to 1.5 mm in the second direction.

By using the foregoing solution, an insulation failure between the battery cells and the end plate caused by a small thickness of the insulating member is avoided.

In some embodiments, a melting point of the insulating member is greater than 100°C.

By using the foregoing solution, it is possible to prevent melting of the insulating member and loss or weakening of the insulation effect when the battery cells experience thermal runaway.

In some embodiments, the end plate is provided with a mounting hole running through in the second direction, where the mounting hole is configured to allow a fastener to pass through for fastening the battery.

The insulating member is provided with a barrier, where the barrier is used to separate the battery cells from an end portion of the fastener extending out of the mounting hole.

By using the foregoing solution, the fastener is generally made of metal, and the barrier can prevent short circuit between the battery cells and the fastener.

In some embodiments, the battery further includes a plurality of bus members for implementing electrical connection of the plurality of battery cells, where the insulating member is provided with a mounting base, and at least one of the bus members is fixedly connected to the mounting base.

In some embodiments, the mounting base is provided with a first connecting hole, where at least one of the bus members is provided with a second connecting hole corresponding to the first connecting hole in position, and the second connecting hole and the first connecting hole are configured to allow a connector to pass through to implement fixed connection between the at least one of the bus members and the mounting base.

By using the foregoing solution, after the bus members electrically connect the plurality of battery cells, electrical signals of the plurality of battery cells are led out from at least one of the bus members, and efforts are made to prevent the bus members and the end plate from direct contact which causes short circuit. The bus members are fixedly connected to the mounting base to prevent the bus members from shaking during operation of an electric apparatus which affects stability of the electrical connection between the plurality of battery cells and stable output of the electrical signals.

In some embodiments, the battery further includes a signal monitoring member for monitoring voltage and/or temperature signals of the plurality of battery cells, where a signal input terminal of the signal monitoring member is electrically connected to the plurality of battery cells, and a signal output terminal of the signal monitoring member is fixed to the insulating member.

By using the foregoing solution, the signal output terminal of the signal monitoring member is fixed to the insulating member to prevent the signal monitoring member and the end plate from direct contact which causes short circuit.

In some embodiments, the insulating member is provided with a mounting groove, and the signal output terminal of the signal monitoring member is fixed to the mounting groove.

By using the foregoing solution, the signal monitoring member is fixed to the mounting groove in the insulating member, so that a user can directly connect to the signal output terminal in the mounting groove to receive a signal output by the signal monitoring member, which is convenient for the user.

In some embodiments, an insulating layer is provided between the bottom surface of the insulating member and the top surface of the end plate.

By using the foregoing solution, the insulation layer strengthens insulation protection on the end plate and further increases the creepage distance and electrical gap between the battery cells and the end plate to prevent short circuit between the battery cells and the end plate.

According to another aspect of the embodiments of this application, an electric apparatus is provided, including the battery of any one of the foregoing embodiments, the battery being used to provide electrical energy.

In the embodiments of this application, the insulating member is disposed above the end plate and length of the insulating member is increased, so that the insulating member fully covers the end plate, thereby reducing a probability of short circuit between the battery cells and the end plate.

The foregoing description is merely a summary of the technical solutions of the embodiments of this application. To make the technical means of the embodiments of this application understood more clearly so as to enable implementation in accordance with the content of the specification, and to make the foregoing and other objectives, features, and advantages of the embodiments of this application more obvious and easier to understand, specific embodiments of this application are described below.

### BRIEF DESCRIPTION OF THE DRAWINGS

To describe the technical solutions in the embodiments of this application more clearly, the following briefly describes the accompanying drawings for describing the embodiments. Apparently, the accompanying drawings in the following description show some embodiments of this application, and a person of ordinary skill in the art may still derive other drawings from these accompanying drawings without creative efforts.
FIG. 1 is a schematic structural diagram of an electric apparatus according to an embodiment of this application;
FIG. 2 is a schematic structural diagram of a battery according to an embodiment of this application;
FIG. 3 is a schematic structural diagram of a battery module according to an embodiment of this application;
FIG. 4 is a schematic structural diagram of a battery cell according to an embodiment of this application;
FIG. 5 is a schematic exploded view of a battery according to an embodiment of this application;
FIG. 6 is a schematic diagram of an end plate and an insulating member fitted together according to an embodiment of this application; and
FIG. 7 is a schematic diagram of an end plate and an insulating member separate from each other according to an embodiment of this application.

### DETAILED DESCRIPTION OF THE EMBODIMENTS

In order to make the objectives, technical solutions, and advantages of the embodiments of this application clearer, the following clearly and completely describes the technical solutions in the embodiments of this application with reference to the accompanying drawings in the embodiments of the present application. Apparently, the described embodiments are some rather than all of the embodiments of the present application. All other embodiments obtained by a person of ordinary skill in the art based on the embodiments of this application without creative efforts shall fall within the protection scope of this application.

Unless otherwise defined, all technical and scientific terms used in this specification have same meanings as those generally understood by a person skilled in the art of this application. The terms used in this specification of this application are only intended to describe the specific embodiments and are not intended to limit this application.

The terms "include" and "have" and any variations thereof in the specification, claims, and the accompanying drawing of this application are intended to cover non-exclusive content. The terms "one" or "a/an" does not exclude the presence of plurality.

The "embodiment" mentioned in this specification means that a specific feature, structure or characteristic described in combination with the embodiments may be included in at least one embodiment of this application. The term "embodiment" appearing in different parts of the specification does not necessarily refer to the same embodiment or an independent or alternative embodiment exclusive of other embodiments. It may be explicitly or implicitly appreciated by a person skilled in the art that the embodiments described in this specification may be combined with other embodiments.

The term "and/or" in this specification merely describes associations between associated objects, and it indicates the possible presence of three relationships. For example, A and/or B may indicate that the presence of only A, both A and B, or only B. In addition, the character "/" in this specification generally indicates that the associated objects are in an "or" relationship.

Orientation words in the following description are all directions shown in the drawings and are not intended to limit specific structures of a battery and an electric apparatus of this application. For example, in the description of this application, the terms such as "central", "longitudinal", "transverse", "long", "wide", "thick", "upper", "lower", "front", "back", "left", "right", "vertical", "horizontal", "top", "bottom", "inner", "outer", "clockwise", "anticlockwise", "axial", "radial" and "circumferential" are used to indicate orientations shown in the drawings. It should be noted that these terms are merely intended to facilitate a simple description of this application, rather than to indicate or imply that the mentioned apparatus or elements must have the specific orientation or must be constructed and operated in the specific orientation. Therefore, these terms should not be construed as limitations on this application.

In addition, the expressions such as X direction, Y direction, and Z direction are not absolute but relative, where the expressions are used to indicate directions in which components of the battery and the electric apparatus in the embodiments are constructed and operated. In addition, although these indications are appropriate when the components of a battery pack are in the positions shown in the drawings, when these positions have changed, these directions should be interpreted differently to correspond to the changes.

In addition, the terms "first", "second", and the like in the specification, claims, or accompanying drawings of this application are used to distinguish between different objects, rather than describe a particular order, and may explicitly or implicitly include one or more of the features.

In the description of this application, unless otherwise specified, "plurality" means more than two (two inclusive), and similarly, "a plurality of groups" means more than two groups (two groups inclusive).

In the description of this application, it should be noted that unless otherwise specified and limited, the terms "mount", "connect" and "join" should be understood in their broad senses. For example, the "joining" or "connection" of mechanical structures may refer to a physical connection, which is, for example, a fixed connection, for example, a fixed connection via a screw, a bolt, or other fasteners. Physical connection may alternatively be a detachable connection, for example, mutual clamping or buckling. Physical connection may alternatively be an integral connection, for example, welding, bonding, or integrally-formed connection. The "joining" or "connection" of circuit structures may refer to a physical connection or an electrical connection or signal connection. For example, it may refer to a direct connection, which is a physical connection, or an indirect connection via at least one intermediate element provided that circuit connectivity is achieved, or an internal communication between two elements. Signal connection may be implemented through a circuit or a medium, for example, a radio wave. A person of ordinary skill in the art should understand specific meanings of the foregoing terms in this application based on specific situations.

In this application, a battery cell may be a lithium-ion secondary battery, a lithium-ion primary battery, a lithium-sulfur battery, a sodium-lithium-ion battery, a sodium-ion battery, a magnesium-ion battery, or the like. This is not limited by the embodiments of this application. The battery cell may be cylindrical, flat, cuboid, or the like. This is not limited in the embodiments of this application, either. Battery cells are generally classified into three types according to a packaging manner: cylindrical battery cells, prismatic battery cells, and pouch battery cells. This is not limited in the embodiments of this application, either.

The battery cell includes a shell, an electrode assembly, and an electrolyte, where the electrode assembly consists of a positive electrode plate, a negative electrode plate, and a separator. The battery cell works mainly depending on migration of metal ions between the positive electrode plate and the negative electrode plate. The positive electrode plate includes a positive electrode current collector and a positive electrode active material layer, where the positive electrode active material layer is applied on a surface of the positive electrode current collector. The part of positive electrode current collector not coated with the positive electrode active material layer protrudes from the part of positive electrode current collector coated with the positive electrode active material layer, and the part of positive electrode current collector not coated with the positive electrode active material layer is used as a positive tab. A lithium-ion battery is used as an example. A material of the positive electrode current collector may be aluminum, and the positive electrode active material may be lithium cobaltate, lithium iron phosphate, ternary lithium, lithium manganate, or the like. The negative electrode plate includes a negative electrode current collector and a negative electrode active material layer, where the negative electrode active material layer is applied on a surface of the negative electrode current collector. The part of negative electrode current collector not coated with the negative electrode active material layer protrudes from the part of negative electrode current collector coated with the negative electrode active material layer, and the part of negative electrode current collector not coated with the negative electrode active material layer is used as a negative tab. A material of the negative electrode current collector may be copper, and the negative electrode active material may be carbon, silicon, or the like. To ensure that a high current can pass without causing fusing, there may be a plurality of positive tabs which are stacked together, and there may be a plurality of negative tabs which are stacked together. A material of the separator may be PP, PE, or the like. In addition, the electrode assembly may be a winding structure or a laminated structure, which is not limited in the embodiments of this application.

The shell includes a housing and an end cover assembly, where the housing is provided with an accommodating cavity and an opening. In other words, the housing does not have a side wall in one direction so that the accommodating cavity communicates with the outside of the housing. After the electrode assembly is loaded into the accommodating cavity through the opening, the opening is closed by the end cover assembly, electrolyte is injected into the accommodating cavity through an injection hole in the end cover assembly, and finally the injection hole is sealed to prevent gaseous, liquid, or solid substances from circulating between the inside and outside of the housing.

The battery typically includes a combination of a plurality of battery cells that are arranged in one direction, and end plates are disposed at two ends of the battery cells in their arrangement direction. The end plates confine the battery cells to a given area to resist an expansion force of the battery cells, and further, the end plates need to keep insulated from the battery cells to prevent short circuit between the battery cells and the end plates.

Therefore, if the end plates are made of a non-metal material, the end plates do not have enough strength to resist the expansion force of the battery cells in their whole life cycle; if the end plates are made of a metal material, short circuit is apt to occur between the end plates and the battery cells, and even high-voltage ignition may occur, which affects use performance and safety performance of the battery.

In view of this, in a relevant technology, end plates are composited with an insulating material to achieve insulation between the end plates and the battery cells. An end plate with such structure reduces risks of short circuit between the battery cells and the end plate to some extent while meeting the strength requirement. However, in use of the battery, short circuit may sometimes occur between the battery cells and the end plates and cause high-voltage ignition.

The inventors have found after research that the foregoing problem is because the use of insufficient insulating material on the end plate as in the prior art results in a small coverage of the insulating material on the end plate, which makes the end plate prone to insulation failure. Especially when one of the battery cells in the battery experiences thermal runaway, high-temperature emissions produced by the battery cell will soften and melt the insulating material, so that a creepage distance and electrical gap between the battery cells and the end plate become smaller, causing short circuit and even high-voltage ignition between the battery cells and the end plate.

In view of this, an embodiment of this application provides a battery with an insulating member provided on an end plate and an increased coverage area of the insulating member on the end plate, enabling the end plate of the battery to not only guarantee strength and insulation requirements in normal use of the battery, but also reduce risks of high voltage short circuit in thermal runaway of the battery.

The battery in this embodiment of this application may be applied to a variety of electric apparatuses that use a battery, for example without limitation, cell phones, portable devices, laptop computers, electric scooters, electric toys, electric tools, electric automobiles, ships, and spacecrafts. For example, spacecrafts include but are not limited to aircrafts, rockets, shuttles, and spaceships.

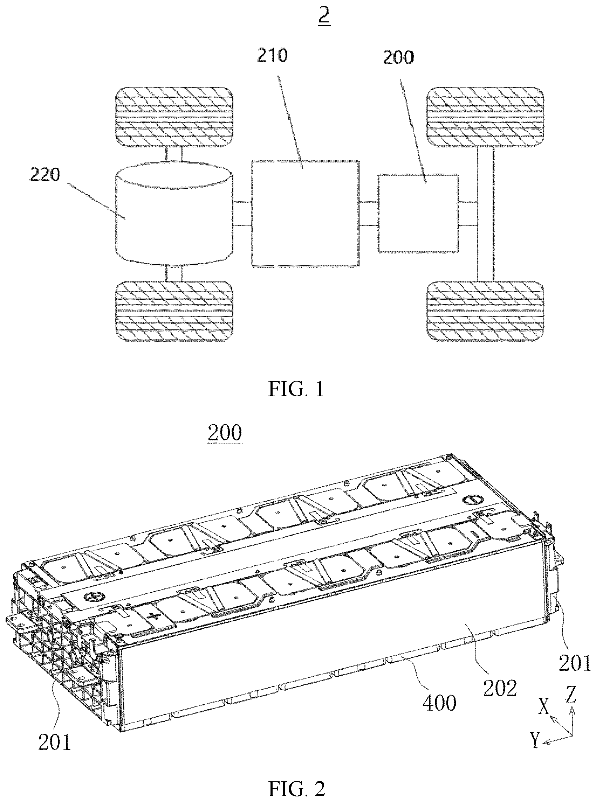

FIG. 1 is a schematic structural diagram of an automobile 2 according to an embodiment of this application. The automobile 2 may be a fuel vehicle, a gas vehicle or a new energy vehicle, and the new energy vehicle may be a battery electric vehicle, a hybrid vehicle, an extended-range electric vehicle, or the like. The automobile 2 includes a battery 200, a controller 210, and a motor 220. The battery 200 is used to supply power to the controller 210 and the motor 220 as an operating power source and a driving power source for the automobile 2. For example, the battery 200 is used to provide operating power required for starting, navigation, and operation of the automobile 2. For example, the battery 200 supplies power to the controller 210, the controller 210 controls the battery 200 to supply power to the motor 220, and the motor 220 receives and uses the power from the battery 200 as the driving power source of the automobile 2, so as to replace or partially replace fuel or gas in providing driving power for the automobile 2.

As shown in FIG. 2, to make the battery 200 have a high power for use, in an embodiment, the battery 200 may include a plurality of battery cells 400 electrically connected to each other.

For example, the battery 200 includes two end plates 201, two side plates 202, the end plates 201 and the side plates 202 enclosing a cavity structure for accommodating the battery cells 400.

In an embodiment, the end plates 201 and the side plates 202 may all be made of metal materials, such as aluminum or aluminum alloy, the end plates 201 and the side plates 202 are welded to each other, and the battery cells 400 are disposed inside the cavity enclosed by the end plates 201 and the side plates 202.

It can be understood that the battery cells 400 may be placed separately in the cavity enclosed by the end plates 201 and the side plates 202, or a plurality of battery cells 400 may be combined into a battery module and one or more such battery modules are placed in the cavity enclosed by the end plates 201 and the side plates 202.

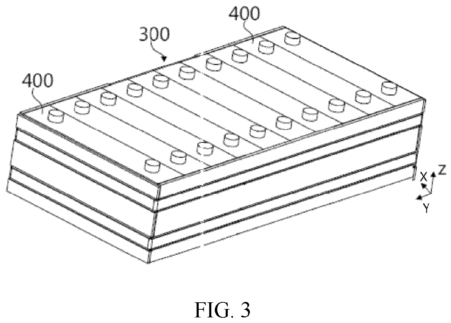

As shown in FIG. 3, the battery module 300 may include one or more battery cells 400. When the battery module 300 includes a plurality of battery cells 400, the plurality of battery cells 400 may be electrically connected in series, parallel, or series-parallel to achieve a larger current or voltage, where series-parallel connection is a combination of series and parallel connection. In addition, the plurality of battery cells 400 may be arranged according to a predetermined rule. As shown in FIG. 3, the battery cells 400 may be placed upright, where a height direction of the battery cells 400 is consistent with a Z direction in the figure, a thickness direction of the battery cells 400 is consistent with a Y direction in the figure, and the plurality of battery cells 400 are arranged side by side along the Y direction in the figure, where the Y direction is perpendicular to the Z direction.

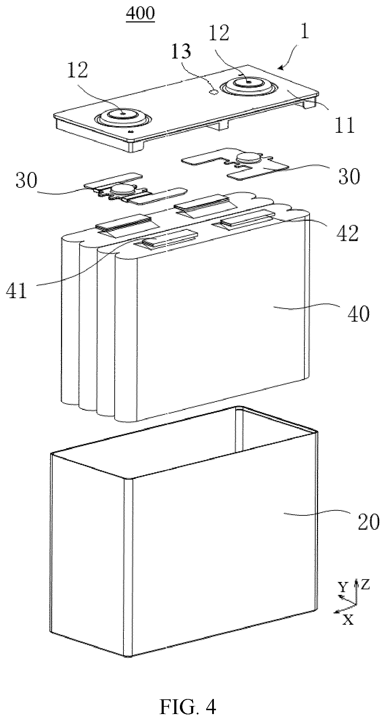

FIG. 4 is a schematic structural diagram of a battery cell 400 according to an embodiment of this application. The battery cell 400 includes a shell and one or more electrode assemblies 40 placed inside the shell. The shell is a hollow chamber that includes an end cover assembly 1 and a housing 20. For example, the housing 20 is provided with an accommodating cavity and has an opening on one side. In other words, no housing wall is present on this plane so that the housing 20 communicates with the outside, so that the electrode assembly 40 can be accommodated in the accommodating cavity of the housing 20, and the end cover assembly 1 is combined with the housing 20 at the opening of the housing 20 to form the hollow cavity.

Shape of the housing 20 depends on shape of the one or more electrode assemblies 40 combined. For example, the housing 20 may be a hollow cuboid, a hollow cube, or a hollow cylinder. When the housing 20 is a hollow cuboid or cube, one of the planes of the housing 20 is an open plane where no housing wall is present so that the housing 20 communicates with the outside. When the housing 20 is a hollow cylinder, at least one round side of the housing 20 is an open plane, where no housing wall is present on that round side so that the housing 20 communicates with the outside. The housing 20 may be made of metal material or plastic, and in some embodiments, the housing 20 is made of aluminum or aluminum alloy.

As shown in FIG. 4, the end cover assembly 1 includes an end cover 11 and two electrode terminals 12. The two electrode terminals 12 are a positive electrode terminal and a negative electrode terminal, and each electrode terminal 12 is provided with one corresponding connection member 30.

The electrode assembly 40 has a positive tab 41 and a negative tab 42. The connection members 30 are used to electrically connect the electrode assembly 40 to the electrode terminals 12. For example, in some embodiments, one connection member 30 is used to electrically connect the positive tab 41 to the positive electrode terminal and the other connection member 30 is used to electrically connect the negative tab 42 to the negative electrode terminal. FIG. 4 only shows battery cells 400 having one cover assembly 1. It can be understood that the battery cells 400 may alternatively include two end cover assemblies 1, which are respectively arranged at two ends of the housing 20, and each end cover assembly 1 is provided with an electrode terminal 12.

The end cover assembly 1 is also provided with an injection hole 13 for injecting electrolyte into the accommodating cavity. The injection hole 13 is sealed after the electrolyte injection is completed.

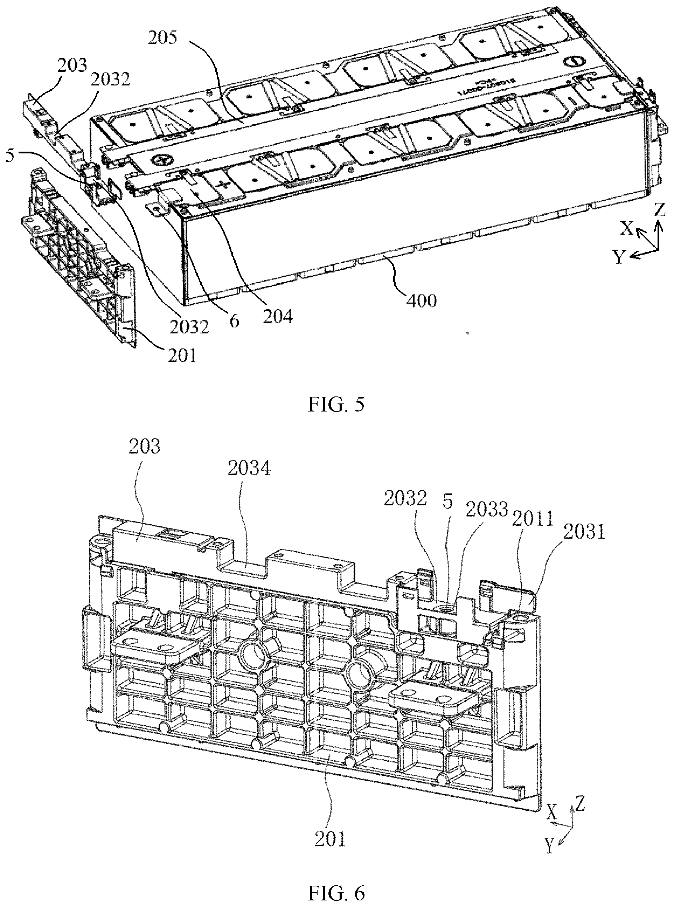

FIG. 5 is a schematic exploded view of a structure of a battery disclosed according to an embodiment of this application. As shown in FIG. 5, the battery 200 includes a plurality of battery cells 400, an end plate 201, and an insulating member 203.

The plurality of battery cells 400 are arranged in a first direction. For example, in an embodiment, the plurality of battery cells 400 are bound and fastened together by a tie after being arranged in the first direction, the first direction being a Y direction shown in FIG. 5.

The end plate 201 is disposed at an end of the plurality of battery cells 400 in the first direction. In an embodiment, two end plates 201 are disposed respectively on outer sides of battery cells 400 disposed at endmost parts in the first direction, where the outer side is a side, away from the remaining battery cells 400, of the battery cell 400 disposed at an end. A material of the end plate 201 may be a metal material, for example, aluminum or aluminum alloy, so as to resist an expansion force of the plurality of battery cells 400 during charging and discharging.

The insulating member 203 is disposed on the top surface of the end plate 201 in a second direction, and the insulating member 203 is connected to the end plate 201. In one embodiment, a material of the insulating member 203 may be a non-metal material such as polycarbonate-ABS resin composite (PC-ABS), polypropylene (PP), or fusible polytetrafluoroethylene (FPA). It is defined that the insulating member 203 has a maximum length A in a third direction and the end plate 201 has a maximum length B in the third direction, where A≥0.9B. The second direction is perpendicular to the first direction and the third direction is perpendicular to the first direction and the second direction. For example, the second direction is a Z direction shown in FIG. 5 and the third direction is an X direction shown in FIG. 5.

In the foregoing solution of this embodiment, the insulating member 203 has a large length in the third direction, almost enough to fully cover the top surface of the end plate 201. Therefore, the insulating member 203 can not only provide considerably complete insulation protection for the end plate 201 when the battery 200 is in normal use, but also fully cover the top surface of the end plate 201 in a case of melting of the insulating member 203 caused by thermal runaway of the battery cells 400. In this way, creepage distances and electrical gaps at all portions on the top of the end plate 201 can still meet an insulation requirement and therefore avoid high-voltage ignition between the end plate 201 and the battery cells 400.

In some embodiments, to ensure insulation protection performance of the insulating member 203 for the end plate 201 and save an unnecessary volume of the insulating member 203, the maximum length of the insulating member 203 in the third direction is less than or equal to the maximum length of the end plate 201 in the third direction, that is, 0.9B≤A≤B. Such arrangement can prevent the insulating member 203 from occupying a large space, thereby facilitating a small volume of the battery 200.

In some embodiments, the battery cell 400 has a maximum length C in the third direction, where A≥0.9C.Because the length of the insulating member 203 in the third direction is close to the length of the battery cells 400 in the third direction, the insulating member 203 can further prevent short circuit between the end plate 201 and the battery cells 400.

In some embodiments, projections of the insulating member 203 and the battery cells 400 in the first direction at least partially overlap. In this embodiment, an edge of the top surface of the battery cells 400 in the second direction is well fitted to the insulating member 203, so that the insulating member 203 separates the edge of the battery cells 400 from the top surface of the end plate 201. Therefore, when an electrical signal of the battery cells 400 is led out from the top of the end plate 201, where the electrical signal is led out is protected from the end plate 201 by the insulating member 203, thus increasing the creepage distance and electrical gap between the battery cells 400 and the end plate 201, and further preventing short circuit between the battery cells 400 and the end plate 201.

In use of the battery 200, when the battery cells 400 are short-circuited, overcharged, pinched, shocked, or experience other like issues, the battery cells 400 may experience thermal runaway during which the battery cells 400 produce a large quantity of emissions that have a high temperature. Therefore, in some embodiments, a melting point of the insulating member 203 is greater than 100°C, which can prevent melting of the insulating member 203 and loss or weakening of the insulation effect when the battery cells 400 experience thermal runaway.

As shown in FIG. 5, in some embodiments, the battery 200 further includes a plurality of bus members 204, the bus members 204 being used to implement electrical connection of the plurality of battery cells 400. For example, the bus members 204 are connected to positive electrode terminals or negative electrode terminals of the plurality of battery cells 400, thereby achieving series, parallel or series-parallel connection between the plurality of battery cells 400, where the series-parallel connection is a combination of series and parallel connections.

FIG. 6 is a schematic structural diagram of the end plate 201 and the insulating member 203 fitted together according to this application. Referring to FIG. 5 and FIG. 6, the insulating member 203 is provided with a mounting base 2032, and at least one bus member 204 is fixedly connected to the mounting base 2032, thereby preventing the bus member 204 and the end plate 201 from direct contact which causes short circuit.

Referring to FIG. 5 and FIG. 6, in one embodiment, fixed connection between the bus member 204 and the mounting base 2032 is implemented as follows: the mounting base 2032 is provided with a first connecting hole 5, at least one bus member 204 is provided with a second connecting hole 6 corresponding to the first connecting hole 5 in position, the second connecting hole 6 and the first connecting hole 5 are configured to allow a connector to pass through to implement fixed connection between at least one bus member 204 and the mounting base 2032. Optionally, the connector is a bolt, which passes through the second connecting hole 6 and the first connecting hole 5 in turn and is fixed in the first connecting hole 5, to fasten the bus member 204 to the mounting base 2032.

In one embodiment, the mounting base 2032 is provided with a nut 2033, and the first connecting hole 5 is a hole in the nut 2033.

By using the foregoing solution, after the bus members 204 electrically connect the plurality of battery cells 400, electrical signals of the plurality of battery cells 400 are led out from at least one of the bus members 204, and efforts are made to prevent the bus members 204 and the end plate 201 from direct contact which causes short circuit. The bus members 204 are fixedly connected to the mounting base 2032 to prevent the bus members 204 from shaking during operation of an electric apparatus which affects stability of the electrical connection between the plurality of battery cells 400 and the stable transmission of the electrical signals.

In some embodiments, the battery 200 further includes a signal monitoring member 205, where the signal monitoring member 205 is used to monitor voltage and/or temperature signals of the plurality of battery cells 400, a signal input terminal of the signal monitoring member 205 is electrically connected to the plurality of battery cells 400, and a signal output terminal of the signal monitoring member 205 is fixed to the insulating member 203. It can be understood that the signal monitoring member 205 is a printed circuit board (PCB) or a flexible circuit board (FPC). Optionally, the insulating member 203 is provided with a mounting groove 2034, and the signal output terminal of the signal monitoring member 205 is fixed to the mounting groove 2034. For example, the signal output terminal of the signal monitoring member 205 is connected to the mounting groove 2034 by using a screw. This solution can prevent the signal monitoring member 205 from directly contacting the end plate 201 to cause short circuit. Further, a user can directly connect to the signal output terminal in the mounting groove 2034 to collect a signal output by the signal monitoring member 205, which is convenient for the user.

As shown in FIG. 6, in some embodiments, the end plate 201 is provided with a mounting hole 2011 running through in the second direction, where the mounting hole 2011 is configured to allow a fastener to pass through for fastening the battery 200. For example, the fastener may be a bolt that passes through the mounting hole 2011 and is fixed to a mounting portion under the end plate 201, where the mounting portion may be provided on the electric apparatus or on any component specially provided for fastening the end plate 201. To ensure a firm fastening position of the battery 200, in an embodiment, the fastener may be made of metal, for example, the fastener is made of steel.

The insulating member 203 is provided with a barrier 2031, where the barrier 2031 is used to separate the battery cells 400 from an end portion of the fastener extending out of the mounting hole 2011. The barrier 2031 being disposed can prevent short circuit between the battery cells 400 and the fastener.

In an embodiment of this application, to enhance an insulation protection effect of the insulating member 203, a minimum thickness of the insulating member 203 in the second direction is greater than or equal to 1.5 mm to prevent insulation failure between the battery cells 400 and the end plate 201 caused by a small thickness of the insulating member 203.

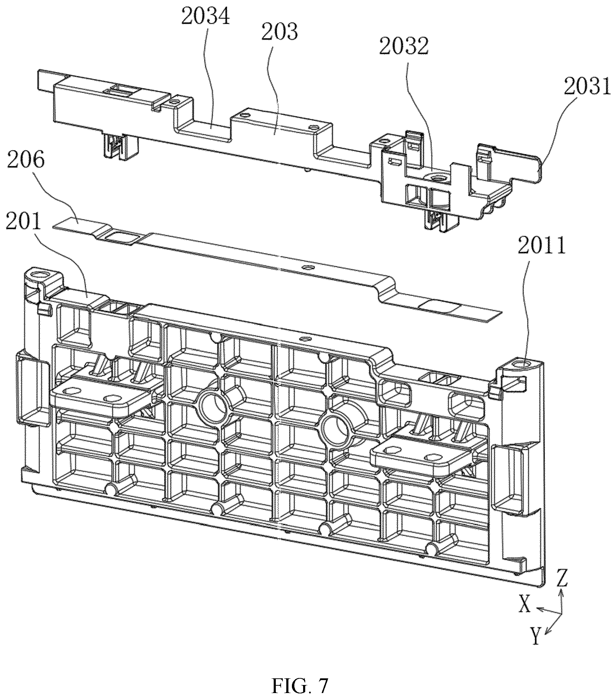

FIG. 7 is a schematic structural diagram of the end plate 201 and the insulating member 203 separate from each other according to this application. As shown in FIG. 7, in another embodiment of this application, an insulating layer 206 is provided between the bottom surface of the insulating member 203 and the top surface of the end plate 201. Optionally, the insulating layer 206 fully covers the top surface of the end plate 201; or the insulating layer 206 is provided in positions directly opposite to weak parts such as the mounting base 2032 and the mounting groove 2034.

In the foregoing embodiment, the insulating layer 206 provides enhanced insulation protection for the end plate 201 to further increase the creepage distance and electrical gap between the battery cells 400 and the end plate 201, thereby preventing short circuit between the battery cells 400 and the end plate 201.

In summary, for the battery 200 described above, the insulating member 203 is disposed above the end plate 201 and length of the insulating member 203 is increased, so that the insulating member 203 fully covers the end plate 201, thereby reducing a probability of short circuit between the battery cells 400 and the end plate 201.

Because the battery 200 in this application has the above-mentioned features, an electric apparatus that uses the battery 200 provided in this application to provide electrical energy also has the same features that can prevent the battery 200 from short-circuiting.

A person skilled in the art can understand that, combinations of features of different embodiments of this application fall within the scope of the appended claim set and form different embodiments.

The foregoing embodiments are merely used to explain the technical solutions of this application, but are not intended to limit the same. Although this application is described in detail with reference to the foregoing embodiments, persons of ordinary skill in the art should understand that they can still modify the technical solutions described in the foregoing embodiments, or make equivalent replacements on some technical features therein. These modifications or replacements do not make the essence of the corresponding technical solutions depart from the scope of the technical solutions of the embodiments of the appended claim set.

## Claims

1. A battery (200), **characterized by** comprising:
a plurality of battery cells (400) arranged in a first direction;
an end plate (201) disposed at an end of the plurality of battery cells (400) in the first direction; and
an insulating member (203) for connecting with the end plate (201), wherein the insulating member (203) is arranged on the top surface of the end plate (201) in a second direction, the second direction being perpendicular to the first direction;
**characterized in that**
the insulating member (203) has a maximum length A in a third direction, the end plate (201) has a maximum length B in the third direction, wherein A≥0.9B and the third direction is perpendicular to the first direction and the second direction.

2. The battery (200) according to claim 1, **characterized in that** 0.9B≤A≤B.

3. The battery (200) according to claim 1 or 2, **characterized in that** the battery cells (400) have a maximum length C in the third direction, wherein A≥0.9C.

4. The battery (200) according to any one of claims 1 to 3, **characterized in that** projections of the insulating member (203) and the battery cells (400) in the first direction at least partially overlap.

5. The battery (200) according to any one of claims 1 to 4, **characterized in that** the insulating member (203) has a minimum thickness greater than or equal to 1.5 mm in the second direction.

6. The battery (200) according to any one of claims 1 to 5, **characterized in that** a melting point of the insulating member (203) is greater than 100°C.

7. The battery (200) according to any one of claims 1 to 6, **characterized in that** the end plate (201) is provided with a mounting hole (2011) running through in the second direction, wherein the mounting hole (2011) is configured to allow a fastener to pass through for fastening the battery (200); and
the insulating member (203) is provided with a barrier (2031), wherein the barrier (2031) is used to separate the battery cells (400) from an end portion of the fastener extending out of the mounting hole (2011).

8. The battery (200) according to any one of claims 1 to 7, **characterized in that** the battery (200) further comprises a plurality of bus members (204) for implementing electrical connection of the plurality of battery cells (400), wherein the insulating member (203) is provided with a mounting base (2032), and at least one of the bus members (204) is fixedly connected to the mounting base (2032).

9. The battery (200) according to claim 8, **characterized in that** the mounting base (2032) is provided with a first connecting hole (5), wherein at least one of the bus members (204) is provided with a second connecting hole (6) corresponding to the first connecting hole (5) in position, and the second connecting hole (6) and the first connecting hole (5) are configured to allow a connector to pass through to implement fixed connection between the at least one of the bus members (204) and the mounting base (2032).

10. The battery (200) according to any one of claims 1 to 9, **characterized in that** the battery (200) further comprises a signal monitoring member (205) for monitoring voltage and/or temperature signals of the plurality of battery cells (400), wherein a signal input terminal of the signal monitoring member (205) is electrically connected to the plurality of battery cells (400), and a signal output terminal of the signal monitoring member (205) is fixed to the insulating member (203).

11. The battery (200) according to claim 10, **characterized in that** the insulating member (203) is provided with a mounting groove (2034), wherein the signal output terminal of the signal monitoring member (205) is fixed to the mounting groove (2034).

12. The battery (200) according to any one of claims 1 to 11, **characterized in that** an insulating layer (206) is provided between the bottom surface of the insulating member (203) and the top surface of the end plate (201).

13. An electric apparatus, **characterized by** comprising the battery (200) according to any one of claims 1 to 12, wherein the battery (200) is used to provide electrical energy.

## Patentansprüche

1. Batterie (200), **dadurch gekennzeichnet, dass** sie Folgendes umfasst:
mehrere Batteriezellen (400), die in einer ersten Richtung angeordnet sind;
eine Endplatte (201), die an einem Ende der mehreren Batteriezellen (400) in der ersten Richtung positioniert ist; und
ein Isolierelement (203) zum Verbinden mit der Endplatte (201), wobei das Isolierelement (203) auf der oberen Oberfläche der Endplatte (201) in einer zweiten Richtung angeordnet ist, wobei die zweite Richtung senkrecht zu der ersten Richtung ist;
**dadurch gekennzeichnet, dass**
das Isolierelement (203) eine maximale Länge A in einer dritten Richtung aufweist, die Endplatte (201) eine maximale Länge B in der dritten Richtung aufweist, wobei A≥0,9B ist und die dritte Richtung senkrecht zu der ersten Richtung und der zweiten Richtung ist.

2. Batterie (200) nach Anspruch 1, **dadurch gekennzeichnet, dass** 0,9B≤A≤B.

3. Batterie (200) nach Anspruch 1 oder 2, **dadurch gekennzeichnet, dass** die Batteriezellen (400) eine maximale Länge C in der dritten Richtung aufweisen, wobei A≥0,9C.

4. Batterie (200) nach einem der Ansprüche 1 bis 3, **dadurch gekennzeichnet, dass** Vorsprünge des Isolierelements (203) und der Batteriezellen (400) in der ersten Richtung sich zumindest teilweise überlappen.

5. Batterie (200) nach einem der Ansprüche 1 bis 4, **dadurch gekennzeichnet, dass** das Isolierelement (203) in der zweiten Richtung eine Mindestdicke aufweist, die größer als oder gleich 1,5 mm ist.

6. Batterie (200) nach einem der Ansprüche 1 bis 5, **dadurch gekennzeichnet, dass** ein Schmelzpunkt des Isolierelements (203) größer als 100 °C ist.

7. Batterie (200) nach einem der Ansprüche 1 bis 6, **dadurch gekennzeichnet, dass** die Endplatte (201) mit einem in der zweiten Richtung verlaufenden Montageloch (2011) versehen ist, wobei das Montageloch (2011) dazu ausgelegt ist, zuzulassen, dass ein Befestigungselement zum Befestigen der Batterie (200) hindurchgeht; und
das Isolierelement (203) mit einer Barriere (2031) versehen ist, wobei die Barriere (2031) verwendet wird, um die Batteriezellen (400) von einem sich aus dem Montageloch (2011) herauserstreckenden Endabschnitt des Befestigungselements zu trennen.

8. Batterie (200) nach einem der Ansprüche 1 bis 7, **dadurch gekennzeichnet, dass** die Batterie (200) ferner mehrere Buselemente (204) zum Implementieren einer elektrischen Verbindung der mehreren Batteriezellen (400) umfasst, wobei das Isolierelement (203) mit einer Montagebasis (2032) versehen ist und mindestens eines der Buselemente (204) fest mit der Montagebasis (2032) verbunden ist.

9. Batterie (200) nach Anspruch 8, **dadurch gekennzeichnet, dass** die Montagebasis (2032) mit einem ersten Verbindungsloch (5) versehen ist, wobei mindestens eines der Buselemente (204) mit einem zweiten Verbindungsloch (6), das dem ersten Verbindungsloch (5) in der Position entspricht, versehen ist und das zweite Verbindungsloch (6) und das erste Verbindungsloch (5) dazu ausgelegt sind, zuzulassen, dass ein Steckverbinder hindurchgeht, um eine feste Verbindung zwischen dem mindestens einen der Buselemente (204) und der Montagebasis (2032) zu implementieren.

10. Batterie (200) nach einem der Ansprüche 1 bis 9, **dadurch gekennzeichnet, dass** die Batterie (200) ferner ein Signalüberwachungselement (205) zum Überwachen von Spannungs- und/oder Temperatursignalen der mehreren Batteriezellen (400) umfasst, wobei ein Signaleingangsanschluss des Signalüberwachungselements (205) elektrisch mit den mehreren Batteriezellen (400) verbunden ist und ein Signalausgangsanschluss des Signalüberwachungselements (205) an dem Isolierelement (203) befestigt ist.

11. Batterie (200) nach Anspruch 10, **dadurch gekennzeichnet, dass** das Isolierelement (203) mit einer Montagenut (2034) versehen ist, wobei der Signalausgangsanschluss des Signalüberwachungselements (205) an der Montagenut (2034) befestigt ist.

12. Batterie (200) nach einem der Ansprüche 1 bis 11, **dadurch gekennzeichnet, dass** eine Isolierschicht (206) zwischen der unteren Oberfläche des Isolierelements (203) und der oberen Oberfläche der Endplatte (201) bereitgestellt ist.

13. Elektrische Vorrichtung, **dadurch gekennzeichnet, dass** sie die Batterie (200) nach einem der Ansprüche 1 bis 12 umfasst, wobei die Batterie (200) verwendet wird, um elektrische Energie bereitzustellen.

## Revendications

1. Batterie (200), **caractérisée en ce qu'**elle comprend :
une pluralité de cellules de batterie (400) agencées dans une première direction ;
une plaque d'extrémité (201) disposée au niveau d'une extrémité de la pluralité de cellules de batterie (400) dans la première direction ; et
un élément isolant (203) pour une connexion avec la plaque d'extrémité (201), dans laquelle l'élément isolant (203) est agencé sur la surface supérieure de la plaque d'extrémité (201) dans une seconde direction, la seconde direction étant perpendiculaire à la première direction ;
**caractérisée en ce que**
l'élément isolant (203) a une longueur maximale A dans une troisième direction, la plaque d'extrémité (201) a une longueur maximale B dans la troisième direction, dans laquelle A ≥ 0,9B et la troisième direction est perpendiculaire à la première direction et à la seconde direction.

2. Batterie (200) selon la revendication 1, **caractérisée en ce que** 0,9B ≤ A ≤ B.

3. Batterie (200) selon la revendication 1 ou 2, **caractérisée en ce que** les cellules de batterie (400) ont une longueur maximale C dans la troisième direction, dans laquelle A ≥ 0,9C.

4. Batterie (200) selon l'une quelconque des revendications 1 à 3, **caractérisée en ce que** des saillies de l'élément isolant (203) et des cellules de batterie (400) dans la première direction se chevauchent au moins partiellement.

5. Batterie (200) selon l'une quelconque des revendications 1 à 4, **caractérisée en ce que** l'élément isolant (203) a une épaisseur minimale supérieure ou égale à 1,5 mm dans la seconde direction.

6. Batterie (200) selon l'une quelconque des revendications 1 à 5, **caractérisée en ce qu'**un point de fusion de l'élément isolant (203) est supérieur à 100°°C.

7. Batterie (200) selon l'une quelconque des revendications 1 à 6, **caractérisée en ce que** la plaque d'extrémité (201) est pourvue d'un trou de montage (2011) traversant dans la seconde direction, dans laquelle le trou de montage (2011) est configuré pour permettre le passage d'un élément de fixation pour fixer la batterie (200) ; et
l'élément isolant (203) est pourvu d'une barrière (2031), dans laquelle la barrière (2031) est utilisée pour séparer les cellules de batterie (400) d'une partie d'extrémité de l'élément de fixation s'étendant hors du trou de montage (2011).

8. Batterie (200) selon l'une quelconque des revendications 1 à 7, **caractérisée en ce que** la batterie (200) comprend en outre une pluralité d'éléments de bus (204) pour réaliser une connexion électrique de la pluralité de cellules de batterie (400), dans laquelle l'élément isolant (203) est pourvu d'une base de montage (2032), et au moins l'un des éléments de bus (204) est connecté de manière fixe à la base de montage (2032).

9. Batterie (200) selon la revendication 8, **caractérisée en ce que** la base de montage (2032) est pourvue d'un premier trou de connexion (5), dans laquelle au moins l'un des éléments de bus (204) est pourvu d'un second trou de connexion (6) correspondant au premier trou de connexion (5) en position, et le second trou de connexion (6) et le premier trou de connexion (5) sont configurés pour permettre le passage d'un connecteur pour réaliser une connexion fixe entre l'au moins un des éléments de bus (204) et la base de montage (2032).

10. Batterie (200) selon l'une quelconque des revendications 1 à 9, **caractérisée en ce que** la batterie (200) comprend en outre un élément de surveillance de signal (205) pour surveiller des signaux de tension et/ou de température de la pluralité de cellules de batterie (400), dans laquelle une borne d'entrée de signal de l'élément de surveillance de signal (205) est connectée électriquement à la pluralité de cellules de batterie (400), et une borne de sortie de signal de l'élément de surveillance de signal (205) est fixée à l'élément isolant (203).

11. Batterie (200) selon la revendication 10, **caractérisée en ce que** l'élément isolant (203) est pourvu d'une rainure de montage (2034), dans laquelle la borne de sortie de signal de l'élément de surveillance de signal (205) est fixée à la rainure de montage (2034).

12. Batterie (200) selon l'une quelconque des revendications 1 à 11, **caractérisée en ce qu'**une couche isolante (206) est fournie entre la surface inférieure de l'élément isolant (203) et la surface supérieure de la plaque d'extrémité (201).

13. Appareil électrique, **caractérisé en ce qu'**il comprend la batterie (200) selon l'une quelconque des revendications 1 à 12, dans lequel la batterie (200) est utilisée pour fournir de l'énergie électrique.
